# EUROPEAN PATENT SPECIFICATION

(11) **EP 3 280 751 B1**
(45) Date of publication and mention of the grant of the patent: **17.03.2021**
(21) Application number: 16714439.3
(22) Date of filing: 06.04.2016
(51) Int. Cl.: C08G 18/48, C08G 18/76, C08G 18/18, C08G 18/40, C08G 18/42, C08G 18/08, C08G 18/34, C08G 101/00

(54) **POLYOL PREMIX COMPOSITION FOR RIGID POLYURETHANE FOAMS**
POLYOLVORMISCHUNGSZUSAMMENSETZUNG FÜR POLYURETHANHARTSCHAUMSTOFFE
COMPOSITION DE PRÉMÉLANGE DE POLYOL POUR MOUSSES DE POLYURÉTHANNE RIGIDES

(30) Priority: 07.04.2015 JP 2015078601
(43) Date of publication of application: 14.02.2018
(73) Proprietor: Covestro Intellectual Property GmbH & Co. KG, 51373 Leverkusen (DE)
(72) Inventor: KASHIWAMOTO, Yuudai, Higashiosaka City Osaka 577-0007 (JP); MOMII, Toshikazu, Kobe City Hyogo 6550-048 (JP)
(74) Representative: Levpat
(86) International application number: PCT/EP2016/057484
(87) International publication number: WO 2016/162362

(56) References cited:
- EP-A1- 0 935 624
- EP-A2- 0 361 937

## Description

The present invention relates to a polyol premix composition for rigid polyurethane foams. More specifically, it relates to a polyol premix composition comprising a hydrohaloolefin as foaming agent that has a high initial reaction rate when it is reacted with isocyanate and shows smaller deterioration of reactivity over time .

In production of rigid polyurethane foams, the polymerization reaction proceeds, as a polyol premix composition containing a polyol, water, a foaming agent, a catalyst, and various assistants, and an isocyanate are mixed and agitated, under generation of the foam. If the reaction is expressed by the phase change of the reaction mixture over time, the reaction proceeds in the following steps:
Step 1: the reaction starts, the reaction mixture becoming cloudy and the viscosity beginning to rise. The period beginning from mixing of the polyol premix and isocyanate until then will be called cream time (abbreviated as "CT").
Step 2: the polymerization reaction starts, making the mixture begin to gel. The period until then will be called gel time (abbreviated as "GT").
Step 3: the reaction on the surface of the foams generated progresses, resulting in foams which are non-adhesive to finger. The period until then will be called tack-free time (abbreviated as "TFT").

The periods of these steps (CT, GT, and TFT) respectively have important roles in preparation of rigid polyurethane foams.

Specifically, a polyurethane reaction mix based on polyol premix composition having a short CT is resistant to dripping from a vertical face when sprayed in the case of spray application, and also resistant to void formation caused by incorporation of air by liquid flow in the case of foaming in a mold. Accordingly, a polyol premix composition leading to a shorter CT is favorable in many applications.

Polyol premix compositions regularly have CTs being relatively long (about 10 seconds and higher). For above mentioned reasons, a need exists for a polyol premix composition that leads to shorter CT and is thus easier to process, when reacted with isocyanate.

Secondly, a long GT prolongs the time until the foams become hard and rigid enough after spraying in the case of spraying, and similarly increases the demolding time in the case of foaming in a mold. On the other hand, an excessively short GT leads to reduction of the processing time, which may result in easier clogging of the spraying machine in the case of spraying and reduction of the flow distance of the foaming reaction mixture in the case of foaming into a mold, thus prohibiting production of uniform foam. Accordingly, the blending composition needs to be adjusted such that GT has a suitable length.

Thirdly, when TFT is longer, the foam may be deformed when the body of the operator is brought in contact therewith in the case of spraying. Similarly, the demolding time may be elongated in the case of foaming into a mold. Alternatively, when TFT is too short, the spraying machine may become easily clogged in the case of spraying and it is not possible to obtain a uniform foam in the case of foaming into a mold. Accordingly, the blending composition is normally adjusted such that TFT has a suitable length.

On the other hand, there is indicated a problem of storage stability common to the polyol premix compositions containing a polyol, water, a foaming agent, an amine catalyst, and various additives. Specifically, it is a problem that the values of CT, GT, and TFT change after the polyol premix composition is stored for an extended period of time. Hereinafter, this problem will be described.

Chlorofluorocarbon (CFC)-based foaming agents, such as trichlorofluoromethane (CFC-11), that are superior in heat conductivity have been used as the foaming agents in production of rigid polyurethane foams. However, the CFC-based foaming agents can be used less easily, as they are considered to be substances destroying the ozone layer in the atmosphere. Under the circumstance, hydrochlorofluoroolefins such as trans-1-chloro-3,3,3-trifluoropropene (HCFO-1233zd) and hydrofluoroolefins such as (Z)-1,1,1,4,4,4-hexafluoro-2-butene (HFO-1336mzz) were developed and encouraged to be used as the foaming agents replacing CFCs. However, polyol premix compositions containing a hydrochlorofluoroolefin and/or a hydrofluoroolefin are not sufficiently high in storage stability. This effect is especially pronounced when an amine is present in the polyol composition due to the reaction of the amine with the hydrohaloolefin, resulting inter alia in partial decomposition of the blowing agent. When such a polyol premix composition after storage for an extended period of time is reacted with an isocyanate, a change (in particular, increase) of the reactivity indicators i.e., CT, GT, and TFT, is observed. The change of these reactivity indicators causes a significant problem from the viewpoint of reliable production of rigid polyurethane and rigid polyisocyanurate foams and thus there exists an urgent need for improvement.

As such a measure, EP 2563829 A discloses a method for improving the storage stability of a polyol premix composition containing a halogenated olefin as foaming agent by adding an ester thereto. It specifically discloses an example in which, when a halogenated olefin (HCFO-1233zd) is used as the foaming agent, methyl formate is added as the ester, but the improvement of storage stability obtained is not yet sufficient. Further, the cream time (CT), an indicator of initial reaction rate, is still more than 10 seconds even when methyl formate is added, suggesting a need for further reduction thereof.

WO 2009/048826 A discloses a polyol premix composition which comprises a combination of a hydrohaloolefin blowing agent, a polyol, a silicone surfactant, and a catalyst which is an adduct of an amine and an organic acid. A long list of acids is given, the most preferred ones are acetic, caprotic, isocaprotic, and 2-ethylhexanoic acid, and combinations thereof. The use of the adduct results in a 1:1 molar ratio of amine:acid in the polyol blend. CTs are not reported, however, GT increases from 105 seconds to 150 seconds after ageing of the polyol composition (120 °F for 62 hours).

Thus, a first object of the present invention is to provide a polyol premix composition for production of rigid polyurethane foams that has a higher initial reaction rate (i.e., shorter CT). The "polyol premix," as used in the present invention, is a mixture of a raw polyol, additives, and a physical foaming agent (excluding water as chemical foaming agent). The mixture of the raw polyol and the additives will be called "blended polyol." The additives include amine catalysts, chemical foaming agents such as water, foam stabilizers, and the like.

Additionally, a second object of the present invention is aimed at improving the storage stability of the polyol premix composition containing a hydrohaloolefin as foaming agent for production of rigid polyurethane foams. Specifically, it is to provide a polyol premix composition that shows smaller change in reactivity (CT, GT, and TFT) in reaction with an isocyanate after storage of the hydrohaloolefin-containing polyol premix composition for an extended period of time than the systems described in the prior art.

After intensive studies to achieve the objects, the inventors have surprisingly found that a polyol premix composition containing a dicarboxylic acid leads to a CT that is significantly shortened.

More surprisingly, the inventors have found that it is possible, by adding the dicarboxylic acid to a hydrohaloolefin- and amine - containing polyol premix composition, to obtain a stabilized polyol premix composition that show only small changes in reactivity indicators (CT, GT, and TFT) of the reaction of the polyol premix composition with the isocyanate after storage for an extended period of time and made the present invention.

Specifically, the present invention relates to [1] a polyol premix composition for production of rigid polyurethane foams containing a polyol, water, a foaming agent comprising a hydrohaloolefin, and an amine catalyst, and additionally an aliphatic dicarboxylic acid as reactivity- and storage stability-improving agent, wherein the aliphatic dicarboxylic acid is succinic acid, glutaric acid, or the mixture thereof and the aliphatic dicarboxylic acid is present in an amount of 1.5 - 2.5 equivalents of carboxyl groups with respect to the amino groups in the amine catalyst.

In the context of this application, the expression "equivalent" or "equivalents" is related to the molecular ratio of carboxyl groups to amino groups in the amine catalyst. In the context of this application, the term "amino - groups" means free amino groups reactive towards carboxylic acids, i.e. quaternary ammonium salts which are contained in the polyol composition before addition of the aliphatic dicarboxylic acid should not be taken into consideration.

The present invention relates to [3] the polyol premix composition described in [1] or [2], wherein the aliphatic dicarboxylic acid is succinic acid, glutaric acid, or the mixture thereof.

The present invention further relates to [4] the polyol premix composition described in either one of [1] to [3], wherein the hydrohaloolefin is a hydrofluoroolefin and/or a hydrochlorofluoroolefin, or the mixture thereof.

The present invention preferably relates to [5] the polyol premix composition described in [4], wherein the hydrochlorofluoroolefin comprises 1-chloro-3,3,3-trifluoropropene.

The present invention further relates to [6] a rigid polyurethane foam prepared by reacting the polyol premix composition described in any one of [1] to [5] with an isocyanate.

The polyurethane reaction mix based on such polyol premix composition containing an added dicarboxylic acid according to the present invention has a shorter CT and is resistant to dripping from a vertical face when sprayed in the case of spray application, and is also resistant to void generation caused by incorporation of air by liquid flow in the case of foaming in a mold.

Further, the polyol premix composition containing an added dicarboxylic acid according to the present invention is improved in storage stability even under the condition where a hydrofluoroolefin for example is contained as foaming agent. Specifically, it is possible to obtain a stabilized polyol premix composition that shows extremely small change in reactivity indicators (CT, GT, and TFT) in the reaction of the dicarboxylic acid-containing polyol premix composition after storage for an extended period of time with an isocyanate.

Further, a rigid polyurethane foam according to the present invention obtained by reacting the polyol premix composition after storage for an extended period of time with an isocyanate and curing the product retains favorable polymer physical properties (hardness and density), independently of the storage period.

Further, the process for producing a rigid polyurethane foam by reacting the polyol premix composition with an isocyanate according to the present invention is effective in giving a rigid polyurethane foam reaction mix resistant to dripping down off a vertical face in the case of spraying and resistant to void generation of the rigid polyurethane foam in the case of foaming in a mold.

Hereinafter, favorable embodiments of the present invention will be described specifically, but it should be understood that the present invention is not restricted by these embodiments.

The present invention is an invention related to a polyol premix composition for production of rigid polyurethane foams, containing a polyol, water, a foaming agent, and an amine catalyst as well as an aliphatic dicarboxylic acid as reactivity- and storage stability-improving agent.

The aliphatic dicarboxylic acid used in the polyol premix composition for rigid polyurethane foams, which is one characteristic of the present invention, is not particularly limited and examples thereof include oxalic acid, malonic acid, succinic acid, glutaric acid, adipic acid, pimelic acid, suberic acid, azelaic acid, sebacic acid, and the like. In particular among them, succinic acid and glutaric acid are preferable, as they are effective in both decreasing the cream time (CT) and improving the storage stability of the polyol premix composition.

The addition amount of the aliphatic dicarboxylic acid for use in the present invention is from 1.5 to 2.5 equivalents, for example 2 equivalents, with respect to the amino groups contained in the amine catalyst of the polyol premix composition.

When the amine catalyst used is a monoamine, the addition amount (moles) of the aliphatic dicarboxylic acid is 0.75 to 1.25 moles, for example 1 mole, with respect to 1 mole of the amine catalyst. Alternatively when the amine catalyst use is a diamine, the addition amount (mole) of the aliphatic dicarboxylic acid is 1.5 to 2.5 moles, for example 2 moles with respect to 1 mole of the amine catalyst..

When the addition amount of the aliphatic dicarboxylic acid is smaller than the range above, it becomes less effective in shortening the cream time (CT) and improving the storage stability of the polyol premix composition. Alternatively when the addition amount of the aliphatic dicarboxylic acid is larger than the range above, no further improvement is observed.

The amine catalyst for use in the present invention is an amine commonly used for production of rigid polyurethane and / or polyisocyanurate foams.

Examples thereof include monoamines and polyamines, such as triethylenediamine, N,N-dimethylbenzylamine and N,N-dimethylcyclohexylamine (DMCHA); tetramethylenediamine, 1-methyl-4-dimethylaminoethylpiperazine, triethylamine, tributylamine, dimethylbenzylamine, N,N',N"-tris(dimethylaminopropyl) hexahydrotriazine, Dimethylamino-propylformamid, N, N , N', N'-tetramethylethylenediamine, N,N,N',N'-tetramethylbutanediamine, N,N,N',N'-tetramethylhexanediamine, pentamethyldiethylenetriamine, Tetramethyldiaminoethylether, dimethylpiperazine, 1,2-dimethylimidazole, 1-azabicyclo[3.3.0]octane, bis(dimethylaminopropyl)-urea, N-methylmorpholine, N-ethylmorpholine, N-cyclohexylmorpholine, 2,3-dimethyl-3,4,5,6-tetrahydropyrimidine, triethanolamine, diethanolamine, ethanolamine, triisopropanolamine, N-methyldiethanolamine, N-ethyldiethanolamine, N,N-dimethylaminoethoxyethanol dimethylethanolamine (DMEA), N,N,N'- trimethylaminoethylethanolamin, 1,4-diazadicyclo[2,2,2]octane (DABCO) and N,N,N',N',N"-pentamethyldiethylenetriamine (PDMAFE); N,N-s-triazine compounds, bis(2-dimethylaminoethyl) ether, bis (dimethylamino-propyl) urea, dimethylpiperazine, 1, 2-dimethyl-imidazole.

Particularly suitable for the catalysis of the urethane reaction are tertiary amines ("urethane catalysts") such as triethylamine, tributylamine, dimethylcyclohexylamine, dimethylbenzylamine, N,N,N',N'-tetramethylethylenediamine, pentamethyldiethylentriamine, bis(2-dimethylaminoethyl)ether, dimethylpiperazine, 1,2-dimethyl-imidazole and alkanolamine compounds such as triethanolamine, triisopropanolamine, N-methyl- and N-ethyl-diethanolamine, N,N-dimethyl-aminoethoxyethanol, N,N,N'-trimethylaminoethyl ethanolamine and dimethylethanolamine. Also, compounds of the structure (CH₃)₂N-CH₂-CH₂-X-CH-CH₂-Y, where Y = NR₂ or OH, preferably Y = N(CH₃)₂ or OH, more preferably Y = N(CH₃)₂ and wherein X = NR or O, preferably X = N-CH₃ or O, more preferably X = N-CH₃. Here, each R is independently selected from any other R and represents an arbitrarily structured organic radical having at least one carbon atom. Preferably, R is an alkyl group having 1 to 12 C-atoms, in particular C₁ - to C₆ -alkyl, particularly preferably methyl and ethyl, especially methyl.

Examples for particular suitable catalysts which catalyse the trimerization of isocyanates (so-called trimerization catalysts) are ammonium salts of above mentioned amines, especially ammonium carboxylates. Preferred carboxylates are formate, Ethylhexanoate and acetates, particularly formate and acetate, especially acetate. A preferred ammonium salt of these amines is (2-hydroxypropyl)trimethylammonium formate; the combinations thereof, and the like. Also suitable are carboxylates of alkali metals or alkaline earth metals and in particular sodium and potassium carboxylates.

In a preferred embodiment, the polyol premix composition contains a catalyst mixture comprising both a urethane reaction catalyst and a trimerization catalyst. In a preferred embodiment, the catalyst mixture comprises the urethane reaction catalyst and the trimerization catalyst in a weight ratio (urethane reaction catalyst / trimerization catalyst) of 0.75 - 8, preferably 1 - 6.

In another preferred embodiment, the catalyst used is selected from monoamine-, diamine-, polyamine-, and alkanolamine-based catalysts and it may be used in combination with an ammonium salt or a non-amine type catalyst, e.g. organic metal compounds such as stannous octanoate, dibutyltin mercaptide, organic bismuth compounds, lead octanoate, and potassium acetate/octanoate, tin (II) acetate, tin (II) octoate, tin (II) ethylhexoate, tin (II) laurate, dibutyltin diacetate, dibutyltin dilaurate, dibutyltin maleate, dioctyltin diacetate, tris- (N, N-dimethylaminopropyl) -s-hexahydrotriazine, tetramethylammonium hydroxide, sodium acetate, sodium octoate, potassium acetate, potassium octoate, sodium hydroxide or mixtures of these catalysts and the like.

The amount (by mass) of the catalyst used is 0.01 to 30 parts by mass, preferably 0.1 to 20 parts by mass, more preferably 0.1 to 10 parts by mass, for example 2 parts by mass, with respect to 100 parts by mass of the polyol.

The expression "polyol" in this application may also mean a mixture of different polyols.

The polyol in the polyol premix composition for rigid polyurethane foams according to the present invention is not particularly limited and selected from polyols such as polyether polyols, polymer polyols, polyether carbonate polyols and polyester polyols.

Examples of the polyether polyols include alkyleneoxide adducts of active hydrogen compounds such as water, alcohols, phenols, amines, Mannich polyols, and the like. Preferred alkyleneoxides are styrene oxide, ethylene oxide, propylene oxide and / or butylene oxide. Examples of the alcohols include bivalent alcohols such as ethylene glycol and propylene glycol and polyvalent alcohols such as glycerol and sucrose; examples of the phenols include hydroquinone, bisphenol A, and the like; and examples of the amines include aromatic amines, e.g. toluenediamine, ethylenediamine, and the like. These active hydrogen compounds (starter compounds) may be used as a mixture of two or more.

Examples of the polyester polyols include condensed polyester polyols prepared by reacting a polyvalent alcohol (a bivalent or trivalent alcohol or the like described above) with a polybasic acid (succinic acid, adipic acid, sebacic acid, maleic acid, dimer acid, trimellitic acid, phtalic acid or the like), polylactone polyols prepared by ring-opening polymerization of a lactone such as ε-caprolactone, the alkyleneoxide adducts thereof, and the like.

Examples of the polymer polyols include polymer polyols prepared by polymerizing a vinyl monomer (acrylonitrile, styrene, or the like) in one or more polyols selected from the polyether polyols and the polyester polyols above, and the mixtures thereof.

In a preferred embodiment, the polyol comprises a mixture of a polyester polyol and a polyether polyol.

The isocyanate for use in the present invention is not particularly limited and may be a compound commonly used for production of rigid polyurethane and polyisocyanurate foams. Examples of the isocyanates include aromatic isocyanates, aliphatic isocyanates, alicyclic isocyanates, and the modified products thereof (e.g., carbodiimide-, allophanate-, urea-, biuret-, isocyanurate-, and oxazolidone-modified products), isocyanate group-terminal prepolymers, and the like. Most widely used among them are aromatic isocyanates and examples thereof include toluene diisocyanate (TDI), crude TDIs, diphenylmethane diisocyanate (monomeric MDI), polymethylene polyphenyl isocyanates (polymeric MDIs), and the like and combinations thereof.

The isocyanate index (NCO/OH ratio) is not particularly limited, but normally 50 to 150, more preferably 75 to 125. When it is in the range above, the polyurethane foam obtained is favorably strong and there is smaller concern about residual of unreacted isocyanate groups. In other embodiments, higher ratios > 150, preferably > 180 are used, resulting in favorable polyisocyanurate foams.

In addition to the halogenated hydroolefins (i.e., hydrofluoroolefins (HFOs), hydrochlorofluoroolefins (HCFOs)) foaming agent, further foaming agents may be added, e.g. water or a volatile foaming agent. The volatile foaming agent used may be a known volatile foaming agent other than halogenated hydroolefins and examples thereof include low-boiling hydrocarbons (e.g., pentane, cyclopentane, hexane, and the mixtures thereof), carbon dioxide gas, hydrofluorocarbons (HFCs)), mixtures thereof, and the like.

Examples for the hydrofluoroolefin (HFO) foaming agents include (but are not limited to) the 3, 4, 5, or 6 carbon-containing compounds shown below: pentafluoropropanes such as 1,2,3,3,3-pentafluoropropene (HFO1225ye); tetrafluoropropenes such as 1,3,3,3-tetrafluoropropene (HFO1234ze, E and Z isomers), 2,3,3,3-tetrafluoropropene (HFO1234yf), and 1,2,3,3-tetrafluoropropene (HFO1234ye); trifluoropropenes such as 3,3,3-trifluoropropene (1243zf); tetrafluorobutenes such as (HFO1345); pentafluorobutene isomers such as (HFO1354); hexafluorobutene isomers such as (HFO1336); heptafluorobutene isomers such as (HFO1327); heptafluoropentene isomers such as (HFO1447); octafluoropentene isomers such as (HFO1438); and nonafluoropentene isomers such as (HFO1429).

Hydrochlorofluoroolefins (HCFOs) are also favorable foaming agents and examples thereof include 1-chloro-3,3,3-trifluoropropene (HCFO-1233zd), 2-chloro-3,3,3-trifluoropropene (HCFO-1233xf), HCFO1223,1,2-dichloro-1,2-difluoroethene (E and Z isomers), 3,3-dichloro-3-fluoropropene, 2-chloro-1,1,1,4,4,4-hexafluorobutene-2 (E and Z isomers), 2-chloro-1,1,1,3,4,4,4-heptafluorobutene-2 (E and Z isomers), and the like.

The amount of the foaming agent used is determined properly according to the density and the foam physical properties of the rigid polyurethane foam produced. For example, it may be determined to give a rigid polyurethane foam having density (kg/m³) of 5 to 200 (preferably 10 to 100), determined according to JIS K 7222 (equivalent to ISO 845).

The preparation of polyurethane or polyisocyanurate foams using the compositions described herein may follow any of the methods well known (see e.g. Saunders and Frisch, Volumes I and II Polyurethanes Chemistry and technology, 1962, John Wiley and Sons, New York, N.Y. In general, polyurethane or polyisocyanurate foams are prepared by combining an isocyanate, the polyol premix composition, and other materials such as optional flame retardants, colorants, or other additives. These foams can be rigid, flexible, or semi-rigid, and can have a closed cell structure, an open cell structure or a mixture of open and closed cells.

A foam stabilizer is preferably used and may be a known silicone-based surfactant, examples thereof include DOW Corning Toray SF2937F, SF2938F, SZ-1671, SZ-1718, SZ-1677, SH193, SF2936F, SZ-1642, SF2945F, SZ-1605, and SZ-1923 produced by Dow Corning Toray Co., Ltd.; F-242TL produced by Shin-Etsu Chemical Co., Ltd.; Tegostab® B-8404 and B-8462 produced by Evonik; and the like.

In addition to the previously described ingredients, other ingredients, such as stabilizers, auxiliary agents, dyes, fillers, pigments, flame retardants, colorants, or other additives may be contained in the polyol premix composition.

### Examples

Hereinafter, typical embodiments of the present invention will be described in detail with reference to Examples but it should be understood that the scope of the present invention is not limited to these Examples.

### <Raw materials used>

Abbreviations for the major raw materials used in Examples and Comparative Examples of the present invention are explained in Table 1.

**Table 1. Raw materials used**

| Abbreviation | Function | Chemical species | Manufacturer "product , name" |
|---|---|---|---|
| Excenol-450SN | Polyol | Polyether polyol, OH-value 450 mg KOH/g | Asahi Glass Co., Ltd. "Excenol 450SN" |
| Z450 | Polyol | o-TDA based Polyether polyol, OH-value 350 mg KOH/g | Sumika Bayer Urethane Co., Ltd. "SBU Polyol Z450" |
| EDP300 | Polyol | Polyether polyol, OH-value 750 mg KOH/g | ADEKA Corp. "Adeka polyether EDP300" |
| PL306 | Polyol | Polyester polyol, OH-value 315 mg KOH/g | Hitachi Kasei Polymer Co., Ltd. "Phantol PL-306" |
| L6988 | Foam stabilizer | Silicone | ** MPMJ "Niax Silicon L-6988" |
| Kao#10 | Catalyst | N,N -dimethylcyclohexylamine | Kao Corp. "Kaolizer No. 10" |
| TMR2 | Catalyst | (2-Hydroxypropyl)trimethylammonium formate | Air Products and Chemicals, Inc. "Dabco TMR2" |
| LBA | Foaming agent | 1-Chloro-3,3,3-trifluoropropene "HCFO-1233zd" | Honeywell Inc. "Solstice LBA" |
| iso | Isocyanate | Polymeric MDI, NCO% 31.5 | Sumika Bayer Urethane Co., Ltd. "Sumidur 44 V20L" |
| Succinic acid * | Dicarboxylic acid | Butanedioic acid | Wako Pure Chemical Industries Co., Ltd. |
| Glutaric acid * | Dicarboxylic acid | Pentanedioic acid | Wako Pure Chemical Industries Co., Ltd. |
| * The dicarboxylic acid was added as a homogeneous solution after it is dissolved in water under heat (water removed by vaporization under heat was replenished). | | | |
| ** Momentive Performance Materials Japan Inc. | | | |

### <Foaming test procedure>

### 1. Abstract

A liquid mixture of the blended polyol and LBA (foaming agent) (referred to as "polyol premix") and an isocyanate were mixed and agitated with a homomixer at a particular blending ratio (referred to as "reaction mixture"). The reaction mixture solution is transferred immediately into a wooden box, wherein the reactivity thereof (cream time (CT), gel time (GT), and tack-free time (TFT)) was determined.

### 2. Foaming test procedure (in detail)

1) Polyols, additives, and others are weighed in predetermined amounts and mixed and homogenized with a homomixer (T. K. Robomix by PRIMIX Co., Ltd.), to give a blended polyol.
2) 100±0.1 g of the blended polyol is weighed into a disposable cup (500 ml).
3) The foaming agent LBA is added in a predetermined amount to the blended polyol thus obtained and the resulting mixture is mixed sufficiently with a homomixer.
4) The mixture is weighed after mixing; LBA lost by vaporization is replenished and the mixture was mixed again. The mixture is then adjusted to a particular temperature (20±0.5°C). After temperature adjustment, the mixture is weighed again. When the weight is smaller than a predetermined value, Step 4) is repeated to give a polyol premix.
5) The isocyanate is weighed in another disposable cup and adjusted to a particular temperature (20±0.5°C). After temperature adjustment, a predetermined amount of the isocyanate was added to the polyol premix of 4. Isocyanate index is 106.
6) simultaneously with start of stop watch, the liquid mixture of 5) is mixed and agitated with a homomixer at 4000 rpm for 5 seconds (referred to as "reaction mixture").
7) The reaction mixture of 6) is poured into a wooden box internally covered with a Kraft paper.
8) The following reactivities (i) to (iii) and the resin physical properties (iv) are measured.
   (i) Cream time (CT): period from start of mixing to until the reaction mixture becomes cloudy and creamy and starts to expand.
   (ii) Gel time (GT): period from start of mixing to the time when, if a wooden chopstick is inserted into and then pulled out of the reaction mixture, the reaction mixture deposited on the chopstick appears stringy. Frequency of insertion ∼1 time per second.
   (iii) Tack-free time (TFT): period from start of mixing to the time when, if a chopstick is brought into contact with the surface of the reaction mixture, the resin appears non-adhesive to the chopstick.
   (iv) Free density (FD): resin density (kg/m³) after free foaming (measured according to JIS K 7222 (corresponds to ISO 845)).

### <Storage stability test procedure>

The polyol premix of 4) is placed in a pressure bottle (model number: 5555-33) manufactured by AS ONE Corporation and stored in an oven adjusted to 50°C for the respective period of time (see table). After it is cooled to room temperature, the reactivity thereof with isocyanate and the resin physical properties are determined according to above foaming test procedure.

### Example 1

A foaming test was performed according to the foaming test procedure above, using the raw materials described in Table 1 and adding succinic acid in an amount of 2 equivalents to the amine catalyst (Kao #10). The amounts of respective components used (part by mass) and the evaluation results of the foaming test are shown in Table 2.

### Example 2

A foaming test was performed according to the foaming test procedure above, using the raw materials described in Table 1 and adding glutaric acid in an amount of 2 equivalents to the amine catalyst (Kao #10). The amounts of respective components used (part by mass) and the evaluation results of the foaming test are shown in Table 2 with the results of Example 1.

### Comparative Example 1a and Comparative Example 1b

A foaming test was performed according to the foaming test procedure above, using the raw materials described in Table 1 without addition of any dicarboxylic acid (Comparative Example 1a) and with addition of glutaric acid in an amount of 1 equivalent to the amine catalyst (Kao #10) (Comparative Example 1b).

The amounts of respective components used (part by mass) and the evaluation results of the foaming tests are shown in Table 2 together with the results of Examples 1 and 2. In Table 2, the addition amounts of Kao #10 and part of dicarboxylic acid are also shown by mole.

**Table 2. Amounts of raw materials used in Examples 1 and 2 and Comparative Example 1a and 1b and evaluation results of foaming test**

| Test No. | Comparative Example 1a No addition of dicarboxylic acid | | | Comparative Example 1b Glutaric acid added in an amount of 1.0 equivalents to amine catalyst (Kao #10) | | | Example 1 Succinic acid added in an amount of 2 equivalents to amine catalyst (Kao #10) | | | Example 2 Glutaric acid added in an amount of 2 equivalents to amine catalyst (Kao #10) | | |
|---|---|---|---|---|---|---|---|---|---|---|---|---|
| Component | Amount: part by mass | | | Amount: part by mass | | | Amount: part by mass | | | Amount: part by mass | | |
| Excenol 450 SN | 40 | | | 40 | | | 40 | | | 40 | | |
| Z450 | 40 | | | 40 | | | 40 | | | 40 | | |
| EDP300 | 5 | | | 5 | | | 5 | | | 5 | | |
| PL306 | 15 | | | 15 | | | 15 | | | 15 | | |
| (Polyol total) | (100) | | | (100) | | | (100) | | | (100) | | |
| L6988 | 2 | 0.0157 mol | | 2 | | | 2 | | | 2 | | |
| Dicarboxylic acid | 0 | | | 1.04 | 0.00785 mol | | 1.86 | 0.0157 mol | | 2.08 | 0.0157 mol | |
| Kao #10 | 2 | | | 2 | 0.0157 mol | | 2 | 0.0157 mol | | 2 | 0.0157 mol | |
| TMR2 | 0.8 | | | 0.8 | | | 0.8 | | | 0.8 | | |
| Water | 1.89 | | | 1.89 | | | 1.89 | | | 1.89 | | |
| (Additives total) | (6.69) | | | (8.24) | | | (8.55) | | | (8.77) | | |
| Blended polyol | 100 | | | 100 | | | 100 | | | 100 | | |
| LBA | 26 | | | 26 | | | 26 | | | 26 | | |
| (Polyol premix total) | (126) | | | (126) | | | (126) | | | (126) | | |
| iso | 123 | | | 123 | | | 123 | | | 123 | | |
| Reaction mixture total | 249 | | | 249 | | | 249 | | | 249 | | |
| | | | | | | | | | | | | |

| Storage period (day) (Temperature: 50°C) | 0 | After 9 days | After 15 days | 0 | After 9 days | After 15 days | 0 | After 9 days | After 15 days | 0 | After 9 days | After 15 days |
|---|---|---|---|---|---|---|---|---|---|---|---|---|
| CT(sec) | 7 | 9 | 10 | 4 | 5 | 7 | 2.5 | 2.5 | 2.5 | 2.5 | 2.5 | 2.5 |
| GT(sec) | 63 | 67 | 72 | 74 | 79 | 85 | 78 | 79 | 79 | 75 | 74 | 76 |
| TFT(sec) | 83 | 88 | 94 | 113 | 129 | 135 | 129 | 137 | 143 | 118 | 119 | 125 |
| FD (kg/m³) | 25.1 | | 25.4 | 25.8 | 25.7 | 25.7 | 23.9 | 23.9 | 23.9 | 24.3 | 24.4 | 24.4 |

When the results of the foaming tests of Examples 1 and 2 are compared with those of Comparative Example 1a wherein no dicarboxylic acid and Comparative Example 1b wherein 0.5 mol (1 equivalence) of glutaric acid was added, that, if succinic acid or glutaric acid is added in an amount of 1 mole (2 equivalents) to the amine catalyst (Kao #10), the cream time (CT) becomes shorter and the change of CT after 15 days is mostly negligible. In addition, the differences both in gel time (GT) and tack-free time (TFT) between the initial state (day 0) and the day 15 were significantly smaller than those of Comparative Example la wherein no dicarboxylic acid was added, indicating that the storage stability of the polyol premix was improved.

### Comparative Example 1c

A foaming test and evaluation of the results were performed similarly to Example 1, except that the addition amount of succinic acid in Example 1 was changed to 1 equivalent to the amine catalyst (Kao #10). The amounts of respective components used (part by mass) and the evaluation results of the foaming tests are shown in Table 3

A foaming test was performed according to the foaming test procedure above, using the raw materials described in Table 1 with addition of succinic acid in an amount of 1 equivalent to the amine catalyst (Kao #10).

### Example 3

A foaming test and evaluation of the results were performed similarly to Example 1, except that the addition amount of succinic acid in Example 1 was changed to 1.39 parts by mass (1.5 equivalents to the amine catalyst (Kao #10). The amounts of respective components used (part by mass) and the evaluation results of the foaming test are shown in Table 3 together with the results of Example 1.

### Example 4

A foaming test and evaluation of the results were performed similarly to Example 1, except that the addition amount of succinic acid in Example 1 was changed to 2.32 parts by mass (2.5 equivalents to the amine catalyst (Kao #10). The amounts of respective components used (part by mass) and the evaluation results of the foaming test are shown in Table 3 with the results of Examples 1 and 3.

**Table 3. Addition amounts of raw materials and results of foaming evaluation test in Examples 3, 4, and 1 and Comparative example 1c**

| Test No. | Comparative Example 1c Succinic acid added in an amount of 1.0 equivalents to amine catalyst (Kao #10) | | | Example 3 Succinic acid added in an amount of 1.5 equivalents to amin catalyst (Kao #10) | | | Example 1 Succinic acid added in an amount of 2 equivalents to amine catalyst (Kao #10) | | | Example 4 Succinic acid added in an amount of 2.5 equivalents to amine catalyst (Kao #10) | | |
|---|---|---|---|---|---|---|---|---|---|---|---|---|
| Component | Amount: part by mass | | | Amount: part by mass | | | Amount: part by mass | | | Amount: part by mass | | |
| Excenol 450 SN | 40 | | | 40 | | | 40 | | | 40 | | |
| Z450 | 40 | | | 40 | | | 40 | | | 40 | | |
| EDP300 | 5 | | | 5 | | | 5 | | | 5 | | |
| PL306 | 15 | | | 15 | | | 15 | | | 15 | | |
| (Polyol total) | (100) | | | (100) | | | (100) | | | (100) | | |
| L6988 | 2 | | | 2 | | | 2 | | | 2 | | |
| Dicarboxylic acid | 0.93 | | | 1.39 | | | 1.86 | | | 2.32 | | |
| Kao #10 | 2 | | | 2 | | | 2 | | | 2 | | |
| TMR2 | 0.8 | | | 0.8 | | | 0.8 | | | 0.8 | | |
| Water | 1.89 | | | 1.89 | | | 1.89 | | | 1.89 | | |
| (Additives total) | (7.62) | | | (8.08) | | | (8.55) | | | (9.01) | | |
| Blended polyol | 100 | | | 100 | | | 100 | | | 100 | | |
| LBA | 26 | | | 26 | | | 26 | | | 26 | | |
| (Polyol premix total) | (126) | | | (126) | | | (126) | | | (126) | | |
| iso | 123 | | | 123 | | | 123 | | | 123 | | |
| Reaction mixture total | 249 | | | 249 | | | 249 | | | 249 | | |
| | | | | | | | | | | | | |

| Storage period (day) (Temperature: 50°C) | 0 | After 9 days | After 15 days | 0 | After 9 days | After 15 days | 0 | After 9 days | After 15 days | 0 | After 9 days | After 15 days |
|---|---|---|---|---|---|---|---|---|---|---|---|---|
| CT(sec) | 4 | 5 | 7 | 3 | 3 | 3 | 2.5 | 2.5 | 2.5 | 2 | 2 | 2 |
| GT(sec) | 62 | 67 | 75 | 71 | 72 | 73 | 78 | 79 | 79 | 91 | 91 | 90 |
| TFT(sec) | 83 | 106 | 108 | 111 | 113 | 118 | 129 | 137 | 143 | 163 | 164 | 166 |
| FD (kg/m³) | 25.1 | 25.2 | 25.3 | 24.1 | 24.2 | 24.1 | 23.9 | 23.9 | 23.9 | 23.3 | 23.3 | 23.4 |

The results of Table 3 show that, if succinic acid is added in an amount of 1.5 to 2.5 equivalents to the amine catalyst (Kao #10), the CT of the polyol premix becomes shorter and remains almost the same even after storage for 15 days. The results further show that the changes of GT and TFT after storage of the polyol premix for 15 days are also smaller than those of Comparative Examples 1a and 1b shown in Table 2 as well as Comparative Example 1c shown in Table 3.

### Example 5

A foaming test and evaluation of the results were performed similarly to Example 2, except that the addition amount of glutaric acid in Example 2 was changed to 1.55 parts by mass (1.5 equivalents to the amine catalyst (Kao #10)). The amounts of respective components used and the evaluation results of the foaming test are shown in Table 4 with the results of Example 2.

### Example 6

A foaming test and evaluation of the results were performed similarly to Example 2, except that the addition amount of glutaric acid in Example 2 was changed to 2.59 parts by mass (2.5 equivalents to the amine catalyst (Kao #10)). The amounts of respective components used and the evaluation results of the foaming test are shown in Table 4 with the results of Examples 2 and 5.

**Table 4. Addition amounts of raw materials and results of foaming evaluation tests in Examples 5, 6, and 2**

| Test No. | Example 5 | | | Example 2 | | | Example 6 | | |
|---|---|---|---|---|---|---|---|---|---|
| | Glutaric acid added in an amount of 1.5 equivalents to amine catalyst (Kao #10) | | | Glutaric acid added in an amount of 2.0 equivalents to amine catalyst (Kao #10) | | | Glutaric acid added in an amount of 2.5 equivalents to amine catalyst (Kao #10) | | |
| Component | Amount: part by mass | | | Amount: part by mass | | | Amount: part by mass | | |
| Excenol 450 SN | 40 | | | 40 | | | 40 | | |
| Z450 | 40 | | | 40 | | | 40 | | |
| EDP300 | 5 | | | 5 | | | 5 | | |
| PL306 | 15 | | | 15 | | | 15 | | |
| (Polyol total) | (100) | | | (100) | | | (100) | | |
| L6988 | 2 | | | 2 | | | 2 | | |
| Dicarboxylic acid | 1.55 | | | 2.08 | | | 2.59 | | |
| Kao #10 | 2 | | | 2 | | | 2 | | |
| TMR2 | 0.8 | | | 0.8 | | | 0.8 | | |
| Water | 1.89 | | | 1.89 | | | 1.89 | | |
| (Additives total) | (8.24) | | | (8.77) | | | (9.28) | | |
| Blended polyol | 100 | | | 100 | | | 100 | | |
| LBA | 26 | | | 26 | | | 26 | | |
| (Polyol premix total) | (126) | | | (126) | | | (126) | | |
| iso | 123 | | | 123 | | | 123 | | |
| Reaction mixture total | 249 | | | 249 | | | 249 | | |
| | | | | | | | | | |
| Storage period (day) (Temperature: 50°C) | 0 | After 9 days | After 15 days | 0 | After 9 days | After 15 days | 0 | After 9 days | After 15 days |
| CT(sec) | 3 | 3 | 3 | 2.5 | 2.5 | 2.5 | 2 | 2 | 2 |
| GT(sec) | 74 | 75 | 76 | 75 | 74 | 76 | 74 | 74 | 77 |
| TFT(sec) | 119 | 126 | 130 | 118 | 119 | 125 | 117 | 117 | 123 |
| FD (kg/m3) | 24.8 | 24.8 | 24.7 | 24.3 | 24.4 | 24.4 | 24.3 | 24.4 | 24.2 |

The results of Table 4 show that, if glutaric acid is added in an amount of 1.5 to 2.5 equivalents to the amine catalyst (Kao #10), the CT of the polyol premix becomes shorter and the change thereof after storage for 15 days is almost negligible. The results further show that the changes of GT and TFT after storage of the polyol premix for 15 days are also smaller than those of Comparative Example 1 shown in Table 2.

### Comparative Examples 2 - 5

A foaming test and evaluation of the results were performed similarly to Example 1, except that the different acids were added in an amount amount of 2 mole equivalents to the amine catalyst (Kao #10)). The amounts of respective components and the type of the acids used and the evaluation results of the foaming test are shown in Table 5 with the results of Examples 2 and 5.

**Table 5. Addition of 2.0 mole equivalents acid, amounts of raw materials and results of foaming evaluation tests in Comparative Examples 2-5**

| Test No. | Example 1 Succinic acid 2.0 equivalents | | Example 2 Glutaric acid 2.0 equivalents | | Comparative Example 2 Malonic acid 2.0 equivalents | | Comparative Example 3 Adipic acid 2.0 equivalents | | Comparative Example 4 Pimelic acid 2.0 equivalents | | Comparative Example 5 Valeric acid 2.0 equivalents | | | | | | | |
|---|---|---|---|---|---|---|---|---|---|---|---|---|---|---|---|---|---|---|
| Component | Amounts: part by mass | | | | | | | | | | | | | | | | | |
| Excenol 450 SN | 40 | | 40 | | 40 | 40 | 40 | | 40 | | 40 | | | | | | | |
| Z450 | 40 | | 40 | | 40 | | 40 | | 40 | | 40 | | | | | | | |
| EDP300 | 5 | | 5 | | 5 | | 5 | | 5 | | 5 | | | | | | | |
| PL306 | 15 | | 15 | | 15 | | 15 | | 15 | | 15 | | | | | | | |
| (Polyol total) | (100) | | (100) | | (100) | | (100) | | (100) | | (100) | | | | | | | |
| L6988 | 2 | | 2 | | 2 | | 2 | | 2 | | 2 | | | | | | | |
| (Di)carboxylic acid | 1.86 | 0.0157 mol | 2.08 | 0.0157 mol | 1.64 | 0.0157 mol | 2.3 | 0.0157 mol | 2.5 2 | 0.0157 mol | 3.66 | 0.0032 mol (mono acid) | | | | | | |
| Kao #10 | 2 | 0.0157 mol | 2 | 0.0157 mol | 2 | 0.0157 mol | 2 | 0.0157 mol | 2 | 0.0157 mol | 2 | 0.0157 mol | | | | | | |
| TMR2 | 0.8 | | 0.8 | | 0.8 | | 0.8 | | 0.8 | | 0.8 | | | | | | | |
| Water | 1.89 | | 1.89 | | 1.89 | | 1.89 | | 1.89 | | 1.89 | | | | | | | |
| (Additives total) | (8.55) | | (8.77) | | (8.33) | | (8.99) | | (9.21) | | (10.35) | | | | | | | |
| Blended polyol | 100 | | 100 | | 100 | | 100 | | 100 | | 100 | | | | | | | |
| LBA | 26 | | 26 | | 26 | | 26 | | 26 | | 26 | | | | | | | |
| (Polyol premix total) | (126) | | (126) | | (126) | | (126) | | (126) | | (126) | | | | | | | |
| iso | 123 | | 123 | | 123 | | 123 | | 123 | | 123 | | | | | | | |
| Reaction mixture total | 249 | | 249 | | 249 | | 249 | | 249 | | 249 | | | | | | | |

| | Example 1 | | | Example 2 | | | Comparative Example 2 | | | Comparative Example 3 | | | Comparative Example 4 | | | Comparative Example 5 | | |
|---|---|---|---|---|---|---|---|---|---|---|---|---|---|---|---|---|---|---|
| | | | | | | | | | | | | | | | | | | |

| Storage period (day) (Temperature: 50°C) | 0 | After 9 days | After 15 days | 0 | After 9 days | After 15 days | 0 | After 9 days | After 15 days | 0 | After 9 days | After 15 days | 0 | After 9 days | After 15 days | 0 | After 9 days | After 15 days |
|---|---|---|---|---|---|---|---|---|---|---|---|---|---|---|---|---|---|---|
| CT(sec) | 2.5 | 2.5 | 2.5 | 2.5 | 2.5 | 2.5 | 13 | 13 | 16 | 13 | 13 | 16 | 13 | 14 | 17 | 15 | 18 | 20 |
| GT(sec) | 78 | 79 | 79 | 75 | 74 | 76 | 108 | 110 | 115 | 108 | 113 | 122 | 123 | 128 | 134 | 109 | 110 | 116 |
| TFT(sec) | 129 | 137 | 143 | 118 | 119 | 125 | 180 | 196 | 200 | 165 | 168 | 175 | 188 | 190 | 195 | 175 | 173 | 194 |
| FD (kg/m3) | 23.9 | 23.9 | 23.9 | 24.3 | 24.4 | 24.4 | 24.7 | 24.4 | 24.5 | 25 | 25.1 | 25.1 | 24.9 | 24.9 | 25 | 24.4 | 24.7 | 24.7 |

The results shown in Table 5 prove the advantageous effect of malic and succinic acid over other dicarboxylic and monocarboxylic acids with regard to CT and storage stability.

The polyol premix composition containing an added dicarboxylic acid according to the present invention gives a rigid polyurethane foam improved in reactivity and also improved in storage stability under a condition containing halogenated olefin as a foaming agent, and can thus be used in production of rigid polyurethane foams extremely superior in practical use.

## Claims

1. A polyol premix composition for production of rigid polyurethane foams, comprising a polyol, water, a foaming agent, and an amine catalyst, and additionally an aliphatic dicarboxylic acid as reactivity- and storage stability-improving agent, wherein the foaming agent comprises a hydrohaloolefin, the aliphatic dicarboxylic acid is succinic acid, glutaric acid, or the mixture thereof and the aliphatic dicarboxylic acid is present in an amount of 1.5 - 2.5 equivalents of carboxyl groups with respect to the amino groups in the amine catalyst.

2. The polyol premix composition according to claim 1, comprising an urethane reaction catalyst and a trimerization catalyst in a weight ratio (urethane reaction catalyst / trimerization catalyst) of 0.75 - 8, preferably 1 - 6.

3. The polyol premix composition according to any one of claims 1 - 2, wherein the amine catalyst is selected from monoamine-, diamine-, polyamine-, and alkanolamine-based catalysts, and wherein the polyol premix composition additionally contains an ammonium salt or a non-amine type catalyst.

4. The polyol premix composition according to any one of the preceding claims, wherein the foaming agent is a hydrochlorofluoroolefin.

5. The polyol premix composition according to any one of the preceding claims, wherein the foaming agent is 1-chloro-3,3,3-trifluoropropene.

6. The polyol premix composition according to any one of the preceding claims, wherein the polyol is a mixture of a polyether polyol and a polyester polyol.

7. The polyol premix composition according to any one of the preceding claims, wherein the polyol comprises an aromatic amine based polyether polyol.

8. A rigid polyurethane foam prepared by reacting the polyol premix composition according to any one of Claims 1 to 7 with an isocyanate.

9. A rigid polyurethane foam according claim 8, wherein the isocyanate comprises diphenylmethane diisocyanate (monomeric MDI) and / or polymethylene polyphenyl isocyanates (polymeric MDIs).

10. A process for producing a rigid polyurethane foam, comprising reacting the polyol premix composition according to any one of Claims 1 -7 with an isocyanate.

11. A process for producing a rigid polyurethane foam according to Claim 10, wherein the process is a spraying process.

## Patentansprüche

1. Polyol-Premixzusammensetzung zur Herstellung von Polyurethan-Hartschaumstoffen, umfassend ein Polyol, Wasser, ein Treibmittel und einen Aminkatalysator und zusätzlich eine aliphatische Dicarbonsäure als die Reaktivität und die Lagerstabilität verbesserndes Mittel, wobei das Treibmittel ein Hydrohalogenolefin umfasst, es sich bei der aliphatischen Dicarbonsäure um Bernsteinsäure, Glutarsäure oder die Mischung davon handelt und die aliphatische Dicarbonsäure in einer Menge von 1,5-2,5 Äquivalenten Carboxylgruppen, bezogen auf die Aminogruppen in dem Aminkatalysator, vorliegt.

2. Polyol-Premixzusammensetzung nach Anspruch 1, umfassend einen Urethanreaktionskatalysator und einen Trimerisierungskatalysator in einem Gewichtsverhältnis (Urethanreaktionskatalysator / Trimerisierungskatalysator) von 0,75-8, vorzugsweise 1-6.

3. Polyol-Premixzusammensetzung nach einem der Ansprüche 1-2, wobei der Aminkatalysator aus Katalysatoren auf Monoamin-, Diamin-, Polyamin- und Alkanolamin-Basis ausgewählt ist und wobei die Polyol-Premixzusammensetzung zusätzlich ein Ammoniumsalz oder einen Katalysator vom Nicht-Amin-Typ umfasst.

4. Polyol-Premixzusammensetzung nach einem der vorhergehenden Ansprüche, wobei es sich bei dem Treibmittel um ein Hydrochlorfluorolefin handelt.

5. Polyol-Premixzusammensetzung nach einem der vorhergehenden Ansprüche, wobei es sich bei dem Treibmittel um 1-Chlor-3,3,3-trifluorpropen handelt.

6. Polyol-Premixzusammensetzung nach einem der vorhergehenden Ansprüche, wobei es sich bei dem Polyol um eine Mischung aus einem Polyetherpolyol und einem Polyesterpolyol handelt.

7. Polyol-Premixzusammensetzung nach einem der vorhergehenden Ansprüche, wobei das Polyol ein Polyetherpolyol auf Basis von aromatischen Aminen umfasst.

8. Polyurethan-Hartschaumstoff, hergestellt durch Umsetzen der Polyol-Premixzusammensetzung nach einem der Ansprüche 1 bis 7 mit einem Isocyanat.

9. Polyurethan-Hartschaumstoff nach Anspruch 8, wobei das Isocyanat Diphenylmethandiisocyanat (monomeres MDI) und/oder Polymethylenpolyphenylisocyanate (polymere MDI) umfasst.

10. Verfahren zur Herstellung eines Polyurethan-Hartschaumstoffs, bei dem man die Polyol-Premixzusammensetzung nach einem der Ansprüche 1-7 mit einem Isocyanat umsetzt.

11. Verfahren zur Herstellung eines Polyurethan-Hartschaumstoffs nach Anspruch 10, wobei es sich bei dem Verfahren um ein Sprühverfahren handelt.

## Revendications

1. Composition de prémélange de polyol pour la production de mousses de polyuréthane rigides, comprenant un polyol, de l'eau, un agent moussant, et un catalyseur de type amine, et de plus un acide dicarboxylique aliphatique en tant qu'agent d'amélioration de la réactivité et de la stabilité au stockage, l'agent moussant comprenant une hydrohalogénooléfine, l'acide dicarboxylique aliphatique étant l'acide succinique, l'acide glutarique, ou le mélange correspondant et l'acide dicarboxylique aliphatique étant présent en une quantité de 1,5 à 2,5 équivalents de groupes carboxyle par rapport aux groupes amino dans le catalyseur de type amine.

2. Composition de prémélange de polyol selon la revendication 1, comprenant un catalyseur de réaction d'uréthane et un catalyseur de trimérisation en un rapport en poids (catalyseur de réaction d'uréthane/catalyseur de trimérisation) de 0,75 à 8, préférablement 1 à 6.

3. Composition de prémélange de polyol selon l'une quelconque des revendications 1 et 2, le catalyseur de type amine étant choisi parmi des catalyseurs à base de monoamine, de diamine, de polyamine, et d'alcanolamine, et la composition de prémélange de polyol contenant de plus un sel d'ammonium ou un catalyseur non de type amine.

4. Composition de prémélange de polyol selon l'une quelconque des revendications précédentes, l'agent moussant étant une hydrochlorofluorooléfine.

5. Composition de prémélange de polyol selon l'une quelconque des revendications précédentes, l'agent moussant étant le 1-chloro-3,3,3-trifluoropropène.

6. Composition de prémélange de polyol selon l'une quelconque des revendications précédentes, le polyol étant un mélange d'un polyéther polyol et un polyester polyol.

7. Composition de prémélange de polyol selon l'une quelconque des revendications précédentes, le polyol comprenant un polyéther polyol à base d'amine aromatique.

8. Mousse de polyuréthane rigide préparée par la mise en réaction de la composition de prémélange de polyol selon l'une quelconque des revendications 1 à 7 avec un isocyanate.

9. Mousse de polyuréthane rigide selon la revendication 8, l'isocyanate comprenant du diisocyanate de diphénylméthane (MDI monomérique) et/ou des isocyanates de polyphényle polyméthylène (MDI polymériques).

10. Procédé pour la production d'une mousse de polyuréthane rigide, comprenant la mise en réaction de la composition de prémélange de polyol selon l'une quelconque des revendications 1 à 7 avec un isocyanate.

11. Procédé pour la production d'une mousse de polyuréthane rigide selon la revendication 10, le procédé étant un procédé par pulvérisation.
